# EUROPEAN PATENT APPLICATION

(11) **EP 2 153 911 A1**
(43) Date of publication of application: **17.02.2010**
(21) Application number: 08425539.7
(22) Date of filing: 05.08.2008
(51) Int. Cl.: B05D 7/00, C09D 5/03

(54) **Painting/coating process using a powder primer with high reactivity, polymerisable in a single step with the finishing coat**

(71) Applicant: Pulverit S.p.A., 20157 Milano MI (IT)
(72) Inventor: Montesano, Cesare, 20052 Monza (IT)
(74) Representative: Petruzziello, Aldo

(57) **Abstract**

A painting cycle is disclosed comprising the use of a powder primer having a gel time between 10 sec and 100 sec and a single polymerisation/curing stage.

## Description

The present invention refers to a process for obtaining painted or coated manufactured articles that entails the use of a powdery primer with high reactivity, understood as gel time, in combination with powdery paints or coatings of thermosetting or photopolymerisable thermoplastic resins.

Furthermore, the present invention also refers to painted/coated manufactured articles comprising said primer, having an improved adhesion between the layers of paint/coating and primer.

It is known to the art to give metals a resistance to corrosion through application of paints or coatings. In painting/coating processes of manufactured articles, it is also known the use of primers to increase adhesion of the paint/coating (finishing coat) to the substrate to be painted/coated, particularly when the substrate is a metal. The poor adhesion of metals to organic compound-based paints/coatings is in fact known.

The processes of the prior art employing primers generally comprise the following stages: preparation of a substrate by means of sandblasting and/or phosphate/chrome treatments, drying at 50/60°C, application of a liquid or powdery primer to the sandblasted substrate, drying and "curing" the primer in a first oven, cooling, application of one or more coats of paint/coating (finishing coat), subsequent polymerisation of the paint/coating in a second oven, and cooling. This type of process necessarily requires the "curing" (polymerisation or cross-linking) of the primer so as to obtain a solid film to which the subsequent layers of paint/coating are caused to adhere. This type of process thus shows the drawback of having high energy costs due to the two curing stages and long production times for the painted/coated manufactured articles because of the numerous processing stages.

In addition to this, the painted/coated products obtained with this type of process are sensitive to peeling (delamination) of the layers in that the layers of paint/coating are simply placed on the film of primer.

As it is known, peeling phenomena represent a defect of the finished product, reducing protection of the substrate.

Object of the present invention is to create a painting/coating cycle that is free from the above mentioned limits and drawbacks; this object is achieved by means of a process having the characterising features indicated in independent claim 1.

Further characteristics of the invention will be apparent from the dependent claims.

Another object of the present invention is to produce painted/coated products that are devoid of the above mentioned drawbacks. This object is achieved by means of products that have the characterising features indicated in independent claim 14.

The subject matter of the present invention is a painting/coating process for substrates comprising:
application onto a substrate of a powder primer, said primer having a gel time between 10 sec and 100 sec at 180°C and a kinematic viscosity at 200°C of at least 3000 mPa.s, application onto said primer of a powder paint/coating having a polymerisation/cross-linking temperature higher than that of the primer
subsequent heat treatment of the substrate at the polymerisation temperature of the paint/coating.

What is meant by gel time is the time that elapses, at a given temperature, between pouring of a certain amount of powdery product into a container and the start of the gelling which leads to setting of the product. The following test is performed to determine this time. About one gram of powder is poured into the thermostated cell at 180°. The powder is allowed to melt under manual stirring/mixing. The test is stopped when the molten primer begins to gel (solidification) so as to be mixable no longer because of polymerisation/cross-linking. The time defined herein as gel-time is the time that elapses between the start of melting, just after the product has been poured into the cell, and gelling.

The primer is formed essentially of powdery resins, preferably of a neutral colour. Polyester type resins can be cited, for example carboxylates, acrylic resins, epoxy resins which are in admixture with crosslinking agent (hardeners), preferably of the amine type, such as - for example - dicyandiamide/imidazoline, or hydroxy alkylamides.

The amount of said hardeners is 0,1-10 parts by weight with respect to 100 parts of resin.
Epoxy-polyester resins, epoxy-acrylic resins which derive from the reaction of acrylic resins and polyester resins with epoxy compounds able to react with said starting resins can also be used as primer.

Polyester or epoxy resins are preferably used.

In place of the above mentioned resins, use can be made of other thermosetting resins or resins photopolymerisable in the presence of UV and of photopolymerisation initiators, such as - for example - polyurethanes and polyester acrylates.

The primer generally has a polymerisation/cross-linking temperature lower than that of the paint, preferably lower than 150°C, more preferably in the range of 120-150°C

The primer has a viscosity, measured with a Brookfield viscosimeter at 200°C, preferably in the range of 3000-8000 mPa.s.

The primer can optionally be used in combination with other additives. Additives that increase the wetting power of the film of primer, such as - for example - acrylates and polysiloxanes can be cited. These compounds are generally used in an amount of 0.1-10 with respect to 100 parts by weight of primer resin.

Other additives that can be used are corrosion inhibitors, for example phosphites; fillers and extenders, such as - for example - calcium carbonate, barium sulphate and zinc oxides.

These compounds are generally present in an amount of 1-30 with respect to 100 parts by weight of primer resin.

After melting of the powder, the primer has a density at 20°C of between 1.1 and 1.5 g/cc, preferably 1.1-1.3 g/cc.

In a preferred embodiment, the primer is based on carboxyl polyester resins and epoxy and/or hydroxyl alkylamide hardeners. These polyester resins have the following characteristics:

| | |
|---|---|
| acid number | : 25 to 55 (mgKOH/g) |
| viscosity (Brookfield) at 200°C | : 3.000 to 8.000 mPa.s |
| Tg ( glass transition) | : 50° to 70°C |

The primer powder is a fine powder. The average diameter of the primer powder particles is in the range of 5-70 microns.

The primer can be applied in the form of a thin film or layer. The application thicknesses of the primer are generally in the range of 10-70 microns. The thickesses of paint/final coating (finishing coat) generally range between 10 and 150 microns.

The substrate of the primer may be a metal or polymer, preferably metal.

Application of the primer powder can be carried out by spray application of the powder using the powder-coating method: the powder is electrostatically charged during spraying and applied to the earthed substrate.

It is also possible to carry out application of said powder using the fluid bed method wherein the powder is electrostatically charged and applied to the earthed substrate.

The primer powder can also be physically deposited on hot substrates.

Application of the paint/coating powder can be carried out using the same procedures described above for the primer powder.

The paint/coating can be based on thermoplastic, thermosetting, photopolymerisable resins. Particularly preferred are polyester resins, acrylic resins having a polymerisation or setting temperature in the range of 170 to 200°C.

The particle size of the paint/coating powder is that generally used in the art. In one embodiment the particle size is in the range indicated for the primer powder.

The heat treatment stage is carried out so as to promote polymerisation or hardening of the paint/coating resin. The temperature of this stage is preferably between 170 and 200°C. The heat treatment takes place by conventional methods, for example using ovens.

The Applicant has verified that with a primer thus formulated it is possible to avoid the intermediate stage of "curing" and cooling of the primer and to carry out polymerisation of the powder primer at the same time as that of the powder paint/coating in a single stage when a primer as defined above is used. The absence of this stage speeds up the production process and represents one of the advantages of the process of the present invention with respect to known processes which require at least two distinct "curing" (or polymerisation) stages.

The Applicant has verified and found that with the process of the present invention the solid film or layer of the primer as defined above and that of the paint/coating penetrate into one another for a few microns. This causes a better adhesion between the two different layers whereas the individual physico-chemical characteristics of the single layers/films remain unchanged, both as regards the layer in contact with the substrate and the final layer of paint/coating.

Without wanting to be bound to any theory, the high reactivity of the primer already at the temperature of 120°C-150°C and the high surface viscosity of the primer in the molten state would seem to prevent the layer of paint/coating (second coat) from sinking completely into the layer of primer.

The painting/coating process of the present invention is thus advantageously of shorter duration than processes of the prior art thanks to the elimination of the primer curing and cooling stages.

In a particular embodiment, the process of the present invention comprises the following stages:
1) preparation of a substrate by means of sandblasting and/or phosphating/chromating;
2) optional drying of the pre-treated substrate at a temperature above 50-100°C;
3) application to the sandblasted substrate of a powder primer as defined above;
4) optional pre-melting of the primer, preferably at temperatures between 45-100°C;
5) subsequent application of a powder paint/coating (finishing coat) as defined above;
6) curing/polymerisation of the paint/coating and subsequent cooling as defined above.

Stage 1) is carried out according to the methods known to the art. It is preferable to carry out the drying stage 2) before carrying out stage 3): in this manner the primer is applied on a metal which is still hot, further improving the performance and also further simplifying the manufacturing process.

With the process of the present invention it is possible to prepare painted/coated manufactured articles in which the primer forms a single body co-penetrating with the finishing coat, thus offering better adhesion between the two different layers compared with the adhesion of the layers of the prior art which are simply placed one on top of the other according to known processes.

The process of the present invention can advantageously be applied for painting/coating manufactured articles, in particular metal articles, for very corrosive environments, near the sea or in agricultural and industrial areas. Cylinders/tanks to be interred, sheet metal products, posts with or without zinc coating, aluminium profiles, electrical switchboards or substations, and more or less complex metal frames (full of sharp edges or corners) can be cited as manufactured articles.

Another object of the present invention is therefore represented by coated/painted manufactured articles comprising a primer as defined above and obtainable by the process of the present invention.

An advantage of the primer of the present invention is represented by the high coverage (mq/kg) thanks to the lower density, generally between 1.1-1.5 g/cc, compared with other primers.

## Claims

1. A painting/coating process for substrates comprising:
application onto a substrate of a powder primer, said primer having a gel time between 10 sec and 100 sec at 180°C and a kinematic viscosity at 200°C of at least 3000 mPa.s, application on said primer of a powder paint/coating having a higher polymerisation/cross-linking temperature that that of the primer
subsequent heat treatment of the substrate at the polymerisation temperature of the paint/coating.

2. A process according to claim 1 wherein the primer is essentially formed by a resin selected among polyester type resins, preferably carboxylates, acrylic resins, epoxy resins, in admixture with amine type hardeners, preferably dicyandiamide/imidazoline, or with hydroxy alkylamide hardeners; epoxy-polyester resins, epoxy-acrylic resins deriving from the reaction of acrylic resins, polyester resins with epoxy compounds capable of reacting with said resins.

3. A process according to claim 1 or 2, wherein the primer has a polymerisation/cross-linking temperature lower than that of the paint/coating, preferably lower than 150°C, more preferably in the range of 120-150°C

4. A process according to any one of claims 1-3 wherein the primer has a viscosity, measured with a Brookfield viscosimeter at 200°C, in the range of 3000 to 8000 mPa.s.

5. A process according to claims 1-4 wherein the primer is used in combination with one or more additives that increase its wetting power, preferably acrylate, polysiloxanes; corrosion inhibitors, preferably phosphates: fillers and extenders, preferably calcium carbonate, barium sulphate, zinc oxides.

6. A process according to any one of claims 1-5 wherein the primer is based on carboxyl polyester resins and epoxy and/or hydroxy alkylamide hardeners, the resin having the following characteristics:
| | |
|---|---|
| acid number | : 25 to 55 (mgKOH/g) |
| viscosity (Brookfield) at 200°C | : 3.000 to 8.000 mPa.s |
| Tg ( glass transition) | : 50° to 70°C |

7. A process according to any one of claims 1-6 wherein the primer is a fine powder, preferably with an average particle diameter between 5 and 70 microns.

8. A process according to any one of claims 1 to 7, wherein the primer is applied in the form of a thin film or of a layer with a thickness between 10 and 70 microns.

9. A process according to any one of claims 1-8 wherein the primer powder is applied by spraying the electrostatically charged powder onto a substrate, or by means of a fluid bed method.

10. A process according to any one of claims 1-9, wherein the heat treatment stage is carried out at temperatures between 170-200°C.

11. A process according to any one of claims 1-10 comprising the following stages:
1) preparation of a substrate by means of sandblasting and/or phosphating/chromating;
2) application on the sandblasted substrate of a powder primer as in claims 2-8;
3) application on the primer of a powder paint/coating (finishing coat);
4) curing/polymerisation of the paint/coating and subsequent cooling.

12. A process according to claim 11 in which the sandblasted substrate is dried at a temperature above 50-100 °C before applying the powder primer on the sandblasted substrate.

13. A process according to claim 11 or 12 wherein the powder primer is pre-melted or softened, preferably at temperatures in the range of 45-100°C.

14. Coated/painted manufactured articles comprising a primer as in claims 2-8 and obtained by means of a process according to any one of claims 11-13.

15. Manufactured articles according to claim 14, selected among cylinders/tanks to be interred, sheet metal products, posts with or without zinc coating, electrical switchboards or substations, and metal frames.
